# NEUE EUROPÄISCHE PATENTSCHRIFT

(11) **EP 1 874 884 B2**
(45) Veröffentlichungstag und Bekanntmachung des Hinweises auf die Entscheidung über den Einspruch: **07.08.2019**
(45) Hinweis auf die Patenterteilung: 11.05.2011
(21) Anmeldenummer: 06723342.9
(22) Anmeldetag: 10.03.2006
(51) Int. Cl.: C09J 123/08, C08L 23/08

(54) **VERWENDUNG NICHTREAKTIVER THERMOPLASTISCHER SCHMELZKLEBSTOFFE AUF BASIS VON METALLOCENKATALYTISCH HERGESTELLTEN POLYOLEFINEN**
USE OF NON-REACTIVE THERMOPLASTIC MELT ADHESIVE BASED ON METALLOCENE-CATALYTICALLY PRODUCED POLYOLEFINS
UTILISATION DE COLLES FUSIBLES THERMOPLASTIQUES NON REACTIVES A BASE DE POLYOLEFINES PRODUITES CATALYTIQUEMENT A L'AIDE D'UN METALLOCENE

(30) Priorität: 28.04.2005 DE 102005020205
(43) Veröffentlichungstag der Anmeldung: 09.01.2008
(73) Patentinhaber: Jowat AG, 32758 Detmold (DE)
(72) Erfinder: TERFLOTH, Christian, 32760 Detmold (DE); STARCK, Felix, 32760 Detmold (DE); BRÜCKNER, Peter, 32758 Detmold (DE)
(74) Vertreter: Von Rohr Patentanwälte Partnerschaft mbB
(86) Internationale Anmeldenummer: PCT/EP2006/002225
(87) Internationale Veröffentlichungsnummer: WO 2006/114160

(56) Entgegenhaltungen:
- EP-A- 1 046 664
- WO-A-97/15636
- WO-A1-00/00565
- WO-A1-97/26287
- WO-A1-97/33921
- WO-A1-98/03603
- WO-A2-01/46277
- WO-A2-01/46278
- US-A- 5 272 236
- US-A- 5 278 272
- US-A- 5 530 054
- US-A- 5 548 014
- US-A- 6 107 430
- US-A- 6 120 887
- US-A1- 2002 198 341
- US-A1- 2002 198 341
- US-A1- 2004 110 886
- US-B1- 6 300 398
- US-B1- 6 319 979
- US-B1- 6 344 515
- US-B1- 6 582 829
- US-B2- 6 747 114
- Brochure Affinity, Dow Chemical, aug. 2004
- Brochure Hot melt adhesives, Dow Chemical, aug. 2004
- Presentation Steve Holding, UK 1997
- vom Patentinhaber am 28.9.2012 eingereichte Versuchsdaten
- I. Benedek, Pressure sensitive adhesives
- Internet link zu Drakeoil 34 information
- Versuchsbericht
- W.Brockmann et al, Klebtechnik
- C. Kreton, Pressure sensitive adhesives
- Cray Valley, Wingtack Hydrocarbon resins
- Rütgers Chemicals, NOVARES resins

## Beschreibung

Die vorliegende Erfindung betrifft die Verwendung eines Klebstoffsystems auf Basis eines nichtreaktiven thermoplastischen Schmelzklebstoffs als Schmelz- und/oder Montagewerkstoff in der Holz- und Möbelverarbeitung unter Verwendung von metallocenkatalytisch hergestellten Copolymeren, insbesondere zu Zwecken der Profilummantelung oder der Kantenverleimung. Der Begriff des Schmelzklebstoffs wird nachfolgend auch synonym als "Hotmelt", "Heißkleber" oder dergleichen bezeichnet.

Gemäß dem Stand der Technik dominieren EVA-Copolymere (d. h. Ethylen/Vinylacetat-Copolymere) den Marktanteil der thermoplastischen Schmelzklebstoffe (Hotmelts) bei weitem. Das größte Anwendungsfeld für thermoplastische Schmelzklebstoffe ist die Papier- und Verpackungsindustrie und hierbei insbesondere die Anwendung zu Zwecken des sogenannten Kartonverschlusses. Darüber hinaus werden ethylenvinylacetatbasierte thermoplastische Schmelzklebstoffsysteme in der Holz- und Möbelverarbeitung eingesetzt.

Die allgemein in der Holz- und Möbelverarbeitung eingesetzten EVA-basierten Schmelzklebstoffe verlangen aber einerseits relativ hohe Verarbeitungstemperaturen, und zwar im allgemeinen im Bereich von 180 bis 210°C, was für das Verkleben hitzeempfindlicher Substrate abträglich ist. Andererseits sind Systeme, die auf Ethylen/Vinylacetat-Copolymeren (EVA) basieren, dahingehend begrenzt, daß mit steigenden Vinylacetatgehalten die Kompatibilität mit den übrigen Formulierungsbestandteilen der Systeme abnimmt, obschon die Elastomerleistungsfähigkeit hierdurch im allgemeinen verbessert wird.

Gelegentlich kommen auch polyolefinbasierte Systeme zur Anwendung. Beispielsweise werden lineares Polyethylen mit geringer Dichte (LLDPE) und Polyethylen mit geringer Dichte (LDPE) als Grundpolymere in einer Vielzahl von Schmelzklebstoffen, insbesondere zum Schachtel- und Kartonverkleben, verwendet. Lineares Polyethylen mit geringer Dichte sowie Polyethylen mit geringer Dichte weisen jedoch als Grund- bzw. Rohmaterialien für Klebstoffe den Nachteil auf, daß sie aufgrund ihrer kristallinen Natur dazu neigen, sehr steif zu sein, und schlechte Kalttemperatureigenschaften aufweisen. Im übrigen haben solche Klebstoffe eine begrenzte Heißverklebungsfähigkeit, was zu geringen Verklebungsablösungstemperaturen führt. Insbesondere aufgrund der schlechten Ölrückhaltefähigkeit weist Polyethylen außerdem eine begrenzte Verwendbarkeit als Grundpolymer bei der Formulierung von Kontaktklebemitteln auf.

Des weiteren sind aus dem Stand der Technik Schmelzklebemassen bekannt, welche Polyolefinwachse enthalten, die mit Hilfe von Metallacenkatalysatoren hergestellt sind (vgl. z. B. DE 103 23 617 A1). Derartige Klebstoffsysteme eignen sich zwar für die Papier- und Verpackungsindustrie, jedoch nicht zur Anwendung in der Holz- und Möbelverarbeitung, insbesondere aufgrund der nur relativ geringen Kohäsion und schlechten Anfangshaftung, aber auch aufgrund der relativ kurzen offenen Zeiten bzw. Verarbeitungszeiten.

Grundsätzlich können die aus dem Stand der Technik bekannten Schmelzklebestoffe auf Basis metallocenkatalytisch hergestellter Polyolefine keine Verwendung in den vorliegend angestrebten Bereichen, insbesondere nicht in der Holz- und Möbelverarbeitung, finden, da sie zu wenig kohäsiv in bezug auf die Anfangs- und Endfestigkeit sind und nur unzureichende offene Zeiten bzw. Verarbeitungszeiten besitzen, so daß sie beispielsweise für Klebeprozesse in der Holz- und Möbelindustrie überhaupt nicht zur Verwendung kommen können.

Die US 2002/0198341 A1 betrifft ein ethylenharzbasiertes Versiegelungsmittel für einen Laminatfilm.

Die EP 1 046 664 A1 offenbart gleichermaßen Klebstoffilme, welche auch Mischungen verschiedener Ethylencopolymere mit unterschiedlichen Schmelzindizes aufweisen können.

Schließlich offenbart die WO 97/15636 A1 Sprühklebstoffmischungen, welche Ethylenpolymere und Klebrigmacher umfassen.

Der vorliegenden Erfindung liegt daher die Aufgabe zugrunde, ein Klebstoffsystem auf Basis eines nichtreaktiven thermoplastischen Schmelzklebstoffs für die Verwendung als Schmelz- und/oder Montagewerkstoff in der Holz- und Möbelverarbeitung bereitzustellen, welches die zuvor geschilderten Nachteile des Standes der Technik zumindest teilweise vermeidet oder aber wenigstens abschwächt.

Eine weitere Aufgabe der vorliegenden Erfindung liegt darin, ein Klebstoffsystem auf Basis eines nichtreaktiven thermoplastischen Schmelzklebstoffs bereitzustellen, welches sich zur Anwendung als Schmelz- und/oder Montagewerkstoff in der Holz- und Möbelverarbeitung eignet.

Die Anmelderin hat nunmehr überraschenderweise herausgefunden, daß man ein für die Verwendung als Schmelz- und/oder Montagewerkstoff in der Holz- und Möbelverarbeitung geeignetes Klebstoffsystem auf Basis eines nichtreaktiven thermoplastischen Schmelzklebstoffs erhält, wenn man dieses Klebstoffsystem mit einer Mischung von mindestens zwei unterschiedlichen metallocenkatalytisch hergestellten Copolymeren mit unterschiedlichen Schmelzindizes (MFIs) in Kombination mit mindestens einem weiteren Polymer und mit mindesten einem weiteren Harz formuliert.

Gegenstand der vorliegenden Erfindung ist somit die Verwendung eines Klebstoffsystems auf Basis eines nichtreaktive thermoplastischen Schmelzklebstoffs als Schmelz- und/oder Montagewerkstoff in der Holz- und Möbelverarbeitung, wobei der Schmelzklebstoff
(A) eine Mischung von mindestens zwei voneinander verschiedenen metallocenkatalytisch hergestellten Copolymeren jeweils von Ethylen oder Propylen mit mindestens einem vorzugsweise linearen α-Olefin,
   - wobei die voneinander verschiedenen Copolymere der Mischung unterschiedliche Schmelzindizes (MFIs) aufweisen, wobei die Mischung metallocenkatalytisch hergestellte Copolymere ("Copolymere I") mit Schmelzindizes MFI ≥ 500 g / 10 min einerseits und metallocenkatalytisch hergestellte Copolymere ("Copolymere II") mit Schmelzindizes MFI ≤ 100 g / 10 min andererseits umfaßt und wobei die Angaben der Schmelzindizes auf ISO 1133 oder ASTM D 123 bei 190 °C und unter 2,16 kg Last bezogen sind, und
   - wobei alle Copolymere der Mischung eine Polydispersität M_{w}/Mₙ von 1,5 bis 2,5 aufweisen;
(B) gegebenenfalls mindestens ein weiteres Polymer; und
(C) mindestens ein Harz
enthält.

Die Anmelderin hat überraschenderweise herausgefunden, daß das zuvor geschilderte Problem durch das zuvor definierte Klebstoffsystem gelöst werden kann.

Eine Besonderheit der vorliegenden Erfindung ist dabei darin zu sehen, daß im Rahmen der vorliegenden Erfindung metallocenkatalytisch hergestellte Copolymere jeweils auf Basis mindestens zweier α-Olefine eingesetzt werden; vergleichbare Copolymere, welche mittels Ziegler/Natta-Katalyse hergestellt sind, eignen sich dagegen nicht uneingeschränkt, da Schmelzklebstoffe auf Basis Ziegler/Natta-katalytisch hergestellter Polyolefine, wie sie teilweise im Bereich der Holz- und Möbelindustrie zum Einsatz kommen, zwar hohe Wärmestandfestigkeiten, jedoch auch relativ hohe Verarbeitungstemperaturen aufweisen, so daß sie in bezug auf wärmeempfindliche Substrate nicht uneingeschränkt verwendbar sind.

Eine weitere Besonderheit der vorliegenden Erfindung ist darin zu sehen, daß im Rahmen des erfindungsgemäß verwendeten Klebstoffsystems eine Mischung von mindestens zwei voneinander verschiedenen metallocenkatalytisch hergestellten Copolymeren jeweils auf Basis mindestens zweier α-Olefine zur Anwendung kommt, welche sich - zumindest - in ihren Schmelzindizes (MFIs) unterscheiden. Auf diese Weise läßt sich ein Klebstoffsystem erhalten, welches verbesserte Schmelzklebstoffeigenschaften aufweist, insbesondere eine gute Kohäsion und Adhäsion bei verbesserter Anfangshaftung und höherer Viskosität bei gleichzeitig niedrigen Anwendungs- bzw. Verarbeitungstemperaturen und verlängerten offenen Zeiten im Vergleich zu aus dem Stand der Technik bekannten, auf gleicher Polymerbasis ausgebildeter Schmelzklebstoffen für den Papier- und Verpackungsbereich. Hierauf wird nachfolgend noch näher eingegangen werden. Dies läßt sich nur durch die spezielle erfindungsgemäß vorgesehene Mischung zweier unterschiedlicher metallocenkatalytisch hergestellter Copolymere mit unterschiedlichem Schmelzindizes (MFIs) erreichen.

Die Anwendungs- und Verarbeitungseigenschaften des erfindungsgemäß verwendeten Klebstoffsystems lassen sich noch weiter dadurch steuern bzw. optimieren, daß mindestens ein weiteres Polymer (B) und mindestens ein Harz (C) in das erfindungsgemäß verwendete Klebstoffsystem inkorporiert werden.

Was den Begriff "Copolymere auf Basis mindestens zweier α-Olefine" betrifft, wie er erfindungsgemäß verwendet wird, so ist dieser Begriff sehr weit zu verstehen, und bezeichnet Copolymere aus zwei, drei, vier etc. verschiedenen α-Olefinen, d. h. dieser Begriff ist nicht auf Copolymere nur auf Basis von mindestens zwei α-Olefinen beschränkt. Dies bedeutet mit anderen Worten also, daß sämtliche metallocenkatalytisch hergestellten Copolymere der Mischung (A) auf Basis mindestens zweier α-Olefine ausgebildet sind, d. h. durch Copolymerisation von zwei oder mehr verschiedenen α-Olefinen hergestellt sind.

Was den Begriff der "voneinander verschiedenen metallocenkatalytisch hergestellten Copolymere" anbelangt, wie er erfindungsgemäß verwendet wird, so meint dies, daß die voneinander verschiedenen Copolymere sich mindestens in ihren Schmelzindizes (MFIs) unterscheiden. Darüber hinaus können aber auch andere physikochemische Eigenschaften unterschiedlich sein, wie nachfolgend noch beschrieben (z. B. chemische Zusammensetzung, Dichten, Schmelzpunkte, Glasübergangstemperaturen, Molekularmassen bzw. Molekulargewichte etc.).

Als metallocenkatalytisch hergestellte Copolymere auf Basis mindestens zweier α-Olefine werden in der Mischung (A) erfindungsgemäß jeweils metallocenkatalytisch hergestellte Copolymere von Ethylen oder Propylen, vorzugsweise Ethylen, mit mindestens einem vorzugsweise linearen α-Olefin eingesetzt; als lineares α-Olefin wird im Fall von Ethylen insbesondere ein C₃-C₂₀-α-Olefin verwendet, wobei das C₃-C₂₀-α-Olefin insbesondere ausgewählt sein kann aus der Gruppe von Propylen, Isobutylen, 1-Buten, 1-Penten, 1-Hexen, 1-Hepten, 4-Methyl-1-penten und 1-Octen und vorzugsweise 1-Octen sein kann, während im Fall von Propylen insbesondere ein C₄-C₂₀-α-Olefin verwendet wird, wobei das C₄-C₂₀-α-Olefin insbesondere ausgewählt sein kann aus der Gruppe von Isobutylen, 1-Buten, 1-Penten, 1-Hexen, 1-Hepten, 4-Methyl-1-penten und 1-Octen. Erfindungsgemäß bevorzugt werden als metallocenkatalytisch hergestellte Copolymere auf Basis mindestens zweier α-Olefine in der Mischung (A) im allgemeinen jeweils metallocenkatalytisch hergestellte Copolymere von Ethylen mit mindestens einem vorzugsweise linearen α-Olefin, insbesondere C₃-C₂₀-α-Olefin, vorzugsweise wie zuvor definiert, verwendet.

Gemäß einer erfindungsgemäß besonders bevorzugten Ausführungsform handelt es sich bei den metallocenkatalytisch hergestellten Copolymeren der Mischung (A) jeweils um metallocenkatalytisch hergestellte Copolymere von Ethylen mit 1-Octen, welche sich in ihren Schmelzindizes (MFIs) voneinander unterscheiden.

Für den Fall, daß die Mischung (A) mehr als zwei voneinander verschiedene Copolymere enthält, weisen mindestens zwei dieser verschiedenen Copolymere unterschiedliche Schmelzindizes (MFIs) auf. Es können aber auch alle Copolymere der Mischung unterschiedliche Schmelzindizes (MFIs) aufweisen.

Besonders leistungsfähige Klebstoffsysteme lassen sich erhalten, wenn die unterschiedlichen Schmelzindizes (MFIs) der verschiedenen Copolymere der Mischung (A) mindestens um 400 g /10 min, bevorzugt mindestens um 600 g /10 min voneinander verschieden sind. Alle Angaben der Schmelzindizes beziehen sich vorliegend und im gesamten nachfolgenden Text auf ISO 1133 bzw. ASTM D 1238 bei 190 °C und unter 2,16 kg, sofern nicht ausdrücklich abweichend angegeben.

Gemäß der vorliegenden Erfindung enthält die Mischung (A) metallocenkatalytisch hergestellte Copolymere ("Copolymere I" genannt) mit Schmelzindizes MFI ≥ 500 g /10 min, insbesondere MFI > 600 g /10 min, vorzugsweise MFI > 700 g /10 min, einerseits und metallocenkatalytisch hergestellte Copolymere ("Copolymere II" genannt) mit Schmelzindizes MFI ≤ 100 g/10 min, insbesondere MFI < 50 g / 10 min, vorzugsweise MFI < 30 g /10 min, andererseits (alle Angaben der Schmelzindizes bezogen auf ISO 1133 oder ASTM D 1238 bei 190 °C und unter 2,16 kg Last, wie zuvor angegeben). Vorteilhafterweise variiert das gewichtsbezogene Copolymere I / Copolymere II-Mengenverhältnis im Bereich von 10 : 1 bis 1 : 2, insbesondere 7 : 1 bis 1 ; 1, vorzugsweise 6 : 1 bis 5 : 1. Ein derartiges, nach der vorliegenden Erfindung verwendetes Klebstoffsystem hat besonders gute Anwendungseigenschaften: Hierdurch werden die Viskositäts- und mechanischen Eigenschaften deutlich verbessert, insbesondere ist ein derartiges System auch bei temperaturempfindlichen zu verklebenden Substraten geeignet. Weiterhin besitzt ein derartiges, nach der vorliegenden Erfindung verwendetes Klebstoffsystem eine besonders gute Anfangsfestigkeit bei der Verklebung sowie exzellente Wärmefestigkeiten, wie die Anmelderin überraschenderweise herausgefunden hat und durch die Ausführungsbeispiele belegt ist.

Gemäß einer vorteilhaften Ausführungsform der vorliegenden Erfindung unterscheiden sich die voneinander verschiedenen Copolymere der Mischung (A) - abgesehen von den unterschiedlichen Schmelzindizes (MFIs) - auch noch in weiteren physikochemischen Eigenschaften, insbesondere in ihren Dichten; Viskositäten, insbesondere Brookfield-Viskositäten; Glasübergangstemperaturen; Schmelzpunkten (DSC); Molekularmassen etc.

Im allgemeinen werden die Copolymere der Mischung (A) derart ausgewählt, daß die Dichte sämtlicher Copolymere der Mischung (A) kleiner als 0,900 g / cm³, insbesondere kleiner als 0,890 g / cm³, vorzugsweise kleiner als 0,880 g / cm³, ist, wobei die Angaben der Dichte sich auf ASTM D 791 beziehen. Vorzugsweise liegt die Dichte aller Copolymere der Mischung (A) im Bereich von 0,840 bis 0,900 g / cm³, insbesondere 0,850 bis 0,890 g / cm³.

Im allgemeinen werden die verschiedenen Copolymere der Mischung (A) derart ausgewählt, daß die voneinander verschiedenen Copolymere der Mischung (A) - neben den unterschiedlichen Schmelzindizes (MFIs) - auch unterschiedliche Dichten aufweisen; für den Fall, daß die Mischung (A) mehr als zwei voneinander verschiedene Copolymere enthält, weisen gemäß dieser Ausführungsform mindestens zwei der verschiedenen Copolymere unterschiedliche Dichten auf. Vorteilhafteiweise sind bei dieser Ausführungsform der vorliegenden Erfindung die unterschiedlichen Dichten der voneinander verschiedenen Copolymere der Mischung (A) mindestens um 1,0 · 10⁻³ g/cm³, insbesondere mindestens um 2,0 · 10⁻³ g /cm³, vorzugsweise mindestens um 3,0 · 10⁻³ g/cm³, voneinander verschieden, wobei die Angaben der Dichten auf ASTM D 791 bezogen sind. Die unterschiedlichen Dichten können insbesondere um bis zu 4,0 · 10⁻³ g/cm³ oder sogar mehr voneinander verschieden sein.

Gemäß einer vorteilhaften Ausführungsform der vorliegenden Erfindung können sich die voneinander verschiedenen Copolymere der Mischung (A) - abgesehen von ihren Unterschieden in den Schmelzindizes (MFIs) und gegebenenfalls in den Dichten - außerdem in ihren Viskositäten, insbesondere Brookfield-Viskositäten, voneinander unterscheiden. Gemäß dieser Ausführungsform der vorliegenden Erfindung weisen die voneinander verschiedenen Copolymere der Mischung (A) außer den vorgenannten Unterschieden auch unterschiedliche Brookfield-Viskositäten auf, wobei für den Fall, daß die Mischung (A) mehr als zwei voneinander verschiedene Copolymere enthält, mindestens zwei der verschiedenen Copolymere unterschiedliche Brookfield-Viskositäten aufweisen. Im allgemeinen sind die Brookfield-Viskositäten der voneinander verschiedenen Copolymere der Mischung (A) bei dieser Ausführungsform bei 177 °C mindestens um 1.000 mPa · s, insbesondere mindestens um 2.000 mPa · s, vorzugsweise mindestens um 3.000 mPa · s, besonders bevorzugt mindestens um 5.000 mPa · s, voneinander verschieden, wobei die Angaben der Brookfield-Viskositäten nach ASTM D 1084 bestimmt sind. Die Unterschiede in den Brookfield-Viskositäten der verschiedenen Copolymere der Mischung (A) können bis zu 8.000 mPa · s oder sogar mehr betragen (ASTM D 1084).

Gemäß einer besonderen Ausführungsform der vorliegenden Erfindung kann die Mischung (A) Copolymere mit Brookfield-Viskositäten bei 177 °C von mehr als 10.000 mPa · s, insbesondere mehr als 12.000 mPa · s, vorzugsweise mehr als 15.000 mPa · s, einerseits und Copolymere mit Brookfield-Viskositäten bei 177 °C von weniger als 10.000 mPa · s, insbesondere weniger als 9.000 mPa · s, vorzugsweise weniger als 8.500 mPa · s, andererseits umfassen, wobei die Angaben der Brookfield-Viskositäten auf ASTM D 1084 bezogen sind.

Gemäß einer besonderen Ausführungsform der vorliegenden Erfindung können die voneinander verschiedenen Copolymere der Mischung (A) außerdem unterschiedliche Glasübergangstemperaturen Tg aufweisen, wobei für den Fall, daß die Mischung (A) mehr als zwei voneinander verschiedene Copolymere enthält, mindestens zwei der verschiedenen Copolymere unterschiedliche Glasübergangstemperaturen Tg aufweisen können. Bei dieser besonderen Ausführungsform der Erfindung sind die unterschiedlichen Glasübergangstemperaturen Tg der voneinander verschiedenen Copolymere der Mischung (A) mindestens um 2 °C, insbesondere mindestens um 3 °C, vorzugsweise mindestens um 5 °C, voneinander verschieden.

Weiterhin können - abgesehen von den übrigen vorgenannten Unterschieden - die voneinander verschiedenen Copolymere der Mischung (A) unterschiedliche Schmelzpunkte (DSC = Differential Scanning Calorimetry) aufweisen, wobei für den Fall, daß die Mischung (A) mehr als zwei voneinander verschiedene Copolymere enthält, bei dieser Ausführungsform mindestens zwei der verschiedenen Copolymere unterschiedliche Schmelzpunkte (DSC) aufweisen können. Bei dieser Ausführungsform sind die unterschiedlichen Schmelzpunkte der voneinander verschiedenen Copolymere der Mischung (A) im allgemeinen mindestens um 2 °C, insbesondere mindestens um 3 °C, vorzugsweise mindestens um 5 °C, besonders bevorzugt mindestens um 7 °C, voneinander verschieden.

Bei dieser besonderen Ausführungsform der vorliegenden Erfindung kann die Mischung (A) gemäß einer besonderen Ausgestaltung Copolymere mit Schmelzpunkten (DSC) von mehr 65 °C, insbesondere mehr als 66 °C, vor zugsweise mehr 67 °C, einerseits und Copolymere mit Schmelzpunkten (DSC) von weniger als 65 °C, insbesondere weniger als 64 °C, andererseits enthalten.

Weiterhin können die voneinander verschiedenen Copolymere der Mischung (A) unterschiedliche Molekulargewichte aufweisen, wobei für den Fall, daß die Mischung (A) mehr als zwei voneinander verschiedene Copolymere enthält, mindestens zwei der verschiedenen Copolymere unterschiedliche Molekularmassen bzw. Molekulargewichte aufweisen. Bei dieser Ausführungsform sind die zahlenmittleren Molekularmassen Mₙ der voneinander verschiedenen Copolymere der Mischung (A) im allgemeinen mindestens um 1.000, insbesondere mindestens um 2.000, vorzugsweise mindestens um 4.000, besonders bevorzugt mindestens um 5.000 oder mehr, voneinander verschieden.

Was die Copolymere der Mischung (A) anbelangt, so können im allgemeinen beliebige metallocenkatalytisch hergestellte Copolymere auf Basis mindestens zweier α-Olefine zur Anwendung kommen, sofern sie die vorgenannte Bedingungen erfüllen, insbesondere unterschiedliche Schmelzindizes (MFIs) und gegebenenfalls weitere unterschiedliche physikochemische Eigenschaften, wie zuvor beschrieben, aufweisen.

Erfindungsgemäß weisen alle Copolymere der Mischung (A) eine Polydispersität M_{w}/Mₙ von 1,5 bis 2,5 auf. Weiterhin ist es vorteilhaft, wenn alle Copolymere der Mischung (A) gewichtsmittlere Molekularmassen M_{w} im Bereich von 2.000 bis 100.000 g / mol aufweisen.

Erfindungsgemäß geeignete, im Rahmen des erfindungsgemäß verwendeten Klebstoffsystems einsetzbare metallocenkatalytisch hergestellte Copolymere der vorgenannten Art sind beispielsweise von der Dow Chemical Company, USA, unter der Bezeichnung "Affinity^{®}" (z.B. Affinity^{®} GA 1900, Affinity^{®} GA 1950 und Affinity^{®} EG 8200) und "Versify^{®}" (z. B. Versify^{®} DE 4000.01, Versify^{®} DE 4200.01 und Versify® DE 4003.01) sowie von der Fa. Exxon Mobil unter der Bezeichnung "Exact^{®} 4038" erhältlich.

Was die Menge an der zuvor genannten Mischung (A) der verschiedenen Copolymere in dem erfindungsgemäß verwendeten Klebstoffsystem anbelangt, so kann diese in weiten Bereichen variieren. Im allgemeinen enthält der Schmelzklebstoff die Mischung (A) der verschiedenen Copolymere, bezogen auf den Schmelzklebstoff, in Mengen von 25 bis 100 Gew.-%, insbesondere 30 bis 90 Gew.-%, vorzugsweise 40 bis 80 Gew.-%, besonders bevorzugt 60 bis 70 Gew.-%. Dennoch kann es anwendungsbezogen oder einzelfallbedingt gegebenenfalls erforderlich sein, von den vorgenannten Mengenbereichen abzuweichen.

Was die Menge an gegebenenfalls vorhandenem weiterem Polymer (B) in dem erfindungsgemäß verwendeten Klebstoffsystem anbelangt, so kann diese gleichermaßen in weiten Bereichen variieren. Im allgemeinen enthält der Schmelzklebstoff das weitere Polymer (B), bezogen auf den Schmelzklebstoff, in Mengen von 0,001 bis 30 Gew.-%, insbesondere 0,01 bis 25 Gew.-%, vorzugsweise 1 bis 25 Gew.-%. Dennoch kann es anwendungsbezogen oder einzelfallbedingt gegebenenfalls erforderlich sein, von den vorgenannten Mengen abzuweichen.

Was das gegebenenfalls vorhandene weitere Polymer der Komponente (B) anbelangt, so kann dieses insbesondere ausgewählt werden aus der Gruppe von vorzugsweise amorphen Poly-α-olefinen, thermoplastischen Polyurethanen, Ethylen/(Meth-)Acrylat-Copolymeren und Ethylen/Vinylacetat-Copolymeren sowie deren Mischungen.

Was die Menge an Harz (C) in dem erfindungsgemäß verwendeten Klebstoffsystem anbelangt, so kann auch diese Menge in weiten Bereichen variieren.

Was das Harz der Komponente (C) anbelangt, so kann dieses ausgewählt sein aus der Gruppe von gegebenenfalls modifizierten, insbesondere gegebenenfalls hydrierten Kohlenwasserstoffharzen, wie aliphatischen, aromatischen oder aliphatisch-aromatischen Kohlenwasserstoffharzen und gegebenenfalls modifizierten Terpenharzen, sowie Naturharzestern, wie Kolophonium- und Tallharzestern. Besonders bevorzugt sind Kohlenwasserstoffharze auf Basis aromatischer, teil- oder vollhydrierter Harze; im allgemeinen steigt die Verträglichkeit bzw. Kompatibilität der Kohlenwasserstoffharze mit den metallocenkatalytisch hergestellten Copolymeren mit dem Hydrierungsgrad dieser Harze. Erfindungsgemäß geeignete aromatische Kohlenwasserstoffharze können beispielsweise Produkte aus der sogenannten TM-TK- und TN-Serie der Fa. Rütgers Chemicals, Duisburg, sein, Bespiele für erfindungsgemäß einsetzbare teil- und vollhydrierte Kohlenwasserstoffharze sind beispielsweise die Typen der 5000er-Serie der Fa. Exxon Mobil, USA. Als erfindungsgemäß einsetzbar aliphatische-aromatische Harze können des weiteren phenolmodifizierte Terpenharze, z. B. aus der ZT-Serie der Fa. Arizona Chemical, USA, in das erfindungsgemäß verwendete Klebstoffsystem eingearbeitet werden. Bei den Naturharzestern kommen insbesondere Kolophonium- oder Tallharzester zum Einsatz; ein Beispiel für einen erfindungsgemäß einsetzbaren Tallharzester ist das Produkt "Sylvatac® RE 100 S" der Fa. Arizona Chemical, USA.

Mit der Inkorporierung der Komponenten (C) und gegebenenfalls (B) in das erfindungsgemäß verwendete Klebstoffsystem lassen sich die Anwendungseigenschaften des erfindungsgemäß verwendeten Klebstoffsystems auf Basis eines nichtreaktiven thermoplastischen Schmelzklebstoffs gezielt steuern bzw. einstellen und damit sozusagen maßschneidem. Insbesondere können hierdurch Adhäsions- und Kohäsionseigenschaften, insbesondere im Hinblick auf eine verbesserte Anfangshaftung, sowie weitere Eigenschaften gezielt eingestellt werden, so z. B. Verarbeitungs- bzw. Auftragstemperaturen, Viskositäten, offene Zeiten etc. Beispielsweise kann der Zusatz von Harzen zur Steuerung bzw. Optimierung der Adhäsionseigenschaften erfolgen. Die betreffenden Zusätze in den entsprechenden Mengen jeweils auszuwählen, liegt im Rahmen des fachmännischen Könnens.

Neben den vorgenannten Komponenten (A) und (C) sowie gegebenenfalls (B) kann das erfindungsgemäß verwendete Klebstoffsystem außerdem weitere Inhaltsstoffe und/oder Additive enthalten. Derartige Inhaltstoffe bzw. Additive können insbesondere ausgewählt sein aus der Gruppe von Stabilisatoren, Alterungsschutzmitteln, UV-Stabilisatoren, Weichmachern, Füllstoffen, Katalysatoren und/oder Lösemitteln. Hier können die dem Fachmann an sich bekannten Substanzen zum Einsatz kommen.

Insbesondere haben sich als Stabilisatoren bzw. Alterungsschutzmittel solche auf Basis von Phenolen bzw. Hydroxyphenylverbindungen bewährt, so z. B. das Octadecyl-3-(3,5-di-tert.-butyl-4-hydroxyphenyl)propionat (z. B. Ciba® IRGANOX® 1076 von der Ciba Specialty Chemicals, Inc., USA) oder aber Trisnonylphenylphosphit (TNPP) (z. B. Ciba® IRGAFOS® TNPP der Ciba Specialty Chemicals, Inc., USA).

Die Viskosität des erfindungsgemäß verwendeten Klebstoffsystems kann über weite Bereichen variiert bzw. eingestellt werden. Im allgemeinen weist das erfindungsgemäß verwendete Klebstoffsystem bzw. der erfindungsgemäß verwendete Schmelzklebstoff eine Viskosität (Brookfield-Viskosität) bei 160 °C von 5.000 bis 120.000 mPa · s auf (gemessen mit Brookfield-Thermosel; vgl. zuvor genannte ASTM D 1084). Durch Auswahl der Komponenten (A) und (C) sowie gegebenenfalls (B) und deren jeweiligen Mengen lassen sich die Viskositäten anwendungsbezogen gezielt einstellen: Während beispielsweise für die Anwendung im Bereich der Profilummantelung Klebstoffsysteme mit einer Viskosität im Bereich von im allgemeinen 5.000 bis 40.000 mPa · s eingesetzt werden, werden zu Zwecken der Kantenverleimung beispielsweise Viskositäten im Bereich von 30.000 bis 120.000 mPa · s realisiert, jeweils bezogen auf 160 °C. Vergleichbare EVA-basierte Schmelzklebstoffe verlangen zur Erzielung derselben Viskositätseigenschaften dagegen deutlich höhere Verarbeitungstemperaturen im Bereich von 180 bis 210 °C.

Nach dem Auftrag und Abkühlen mit nachfolgender 24stündiger Lagerung führt das erfindungsgemäß verwendete Klebstoffsystem bzw. der erfindungsgemäß verwendete Schmelzklebstoff zu hervorragenden Festigkeitseigenschaften. So weist das erfindungsgemäß verwendete Klebstoffsystem bzw. der erfindungsgemäß verwendete Schmelzklebstoff eine maximale Zugfestigkeit, bestimmt gemäß DIN 53455, nach Auftrag bzw. Applikation und nachfolgender 24stündiger Lagerung im Normalklima (50 % relative Luftfeuchtigkeit, 20 °C) von 1 bis 4 MPa, insbesondere 1 bis 2 MPa, auf.

Die Reißdehnung des erfindungsgemäß verwendeten Klebstoffsystems bzw. des erfindungsgemäß verwendeten Schmelzklebstoffs, gleichermaßen bestimmt gemäß DIN 53455, nach Auftrag bzw. Applikation und 24stündiger Lagerung im Normalklima (50 % relative Luftfeuchtigkeit, 20 °C) liegt im Bereich von 200 bis 1.200 %, insbesondere 300 bis 1.000 %, was auf eine vorteilhafte Elastizität der Klebeverbindung schließen läßt.

Gegenüber vergleichbaren EVA-Schmelzklebstoffen weist das erfindungsgemäß verwendete Klebstoffsystem deutlich reduzierte Dichten auf, verbunden mit einem verringerten Verbrauch. Im allgemeinen liegt die Dichte des erfindungsgemäß verwendeten Klebstoffsystems bei 20 °C bei Werten ≤ 0,910 g/cm³, insbesondere ≤ 0,900 g / cm³, vorzugsweise ≤ 0,890 g / cm³.

Wie zuvor geschildert, findet das erfindungsgemäß verwendete Klebstoffsystem bzw. der erfindungsgemäß verwendete Schmelzklebstoff Anwendung in der Holz- und Möbelverarbeitung als Schmelz- und/oder Montagewerkstoff. Gegenstand der vorliegenden Erfindung ist somit die Verwendung des erfindungsgemäß verwendeten Klebstoffsystems bzw. des erfindungsgemäß verwendeten Schmelzklebstoffs als Schmelz- und/oder Montagewerkstoff in der Holz- und Möbelverarbeitung bzw. in der Holz- und Möbelindustrie. Erfindungsgemäß findet also das erfindungsgemäß verwendete Klebstoffsystem bzw. der erfindungsgemäß verwendete Schmelzklebstoff als Schmelz- und/oder Montagewerkstoff in der Holz- und Möbelverarbeitung Verwendung, z. B. zu Zwecken der Profilummantelung oder der Kantenverleimung. Im Vergleich zu vergleichbaren EVA-basierten Hotmelts erfolgt die Verarbeitung bzw. der Auftrag bei Temperaturen unterhalb von 180 °C, insbesondere unterhalb von 175 °C, vorzugsweise unterhalb von 170 °C, so daß sich das erfindungsgemäß verwendete Klebstoffsystem auch für die Anwendungen in bezug auf relativ temperaturempfindliche Substrate eignet.

Mit der vorliegenden Erfindung sind eine Vielzahl von Vorteilen verbunden, wie sie nachfolgend rein beispielhaft und veranschaulichend dargestellt sind:
Wie zuvor geschildert, ist es mit der vorliegenden Erfindung erstmals gelungen, nichtreaktive thermoplastische Schmelzklebstoffe auf Basis metallocenkatalytisch hergestellter Copolymere auf Basis mindestens zweier α-Olefine bereitgestellt zu haben, welche Anwendung in der Holz- und Möbelverarbeitung finden, insbesondere da die erfindungsgemäß verwendeten Klebstoffsysteme verbesserte Eigenschaften besitzen, insbesondere eine verbesserte Kohäsion und Adhäsion, eine für diese speziellen Anwendungszwecke optimierte Viskosität, eine verbesserte Anfangshaftung und eine verbesserte physikalische Festigkeit nach Auftrag und Abkühlen des Klebstoffs.
Zudem ist die offene Zeit der erfindungsgemäß verwendeten Schmelzklebstoffe deutlich verlängert: Im allgemeinen beträgt diese mindestens 25 Sekunden, vorzugsweise mindestens 30 Sekunden, so daß sich Verklebungen im Bereich der Holz- und Möbelverarbeitung einfacher bzw. anwendungsgerechter realisieren lassen. Bislang konnten keine Schmelzklebstoffe (Hotmelts, Heißkleber) auf Basis metallocenkatalytisch hergestellter Polyolefine erhalten werden, welche außerhalb der Papier- und Verpackungsindustrie zur Anwendung kamen, insbesondere nicht im Bereich der Holz- und Möbelindustrie, da die aus dem Stand der Technik bekannten Systeme nicht die im Bereich der Holz- und Möbelverarbeitung gestellten höheren Anforderungen hinsichtlich Kohäsion, offene Zeit,
Wärmestandfestigkeit und Viskosität erfüllen. Erst durch die Auswahl spezieller metallocenkatalytisch hergestellter Polyolefine mit unterschiedlichen Schmelzindizes (MFIs) können im Rahmen der vorliegenden Erfindung erstmals Schmelzklebstoffe bereitgestellt werden, welche Anwendungen für die Holz- und Möbelindustrie, nämlich als Schmelz- und/oder Montagewerkstoff in der Holz- und Möbelverarbeitung, erschließen. Grundsätzlich können die erfindungsgemäß verwendeten Schmelzklebstoffe in allen Bereichen der Holz- und Möbelverarbeitung als Schmelz- und/oder Montagewerkstoff Anwendung finden, in denen grundsätzlich kohäsive Schmelzklebstoffe mit verlängerten offenen Zeiten bzw. verlängerten Verarbeitungszeiten benötigt werden.

Im Unterschied zu EVA-basierten Schmelzklebstoffen wird ein deutlich geringerer Klebstoffverbrauch mit dem erfindungsgemäß verwendeten Klebstoffsystem realisiert, da die Dichte der metallocenkatalytisch hergestellten Polymere ca. 10 % unter dem Wert von entsprechenden EVA-Copolymeren liegt.

Im Unterschied zu vergleichbaren EVA-basierten Schmelzklebstoffsystemen, welche aufgrund der Hydrolyse des Essigsäureesters stets einen essigsauren Geruch zeigen, sind die erfindungsgemäß verwendeten Schmelzklebstoffe geruchsfrei.

Des weiteren sind die erfindungsgemäß verwendeten Schmelzklebstoffe im Unterschied zu EVA-Copolymeren, welche durch Abspaltung von Essigsäure Korrosion auslösen können, nicht korrosiv.

Auch die thermische Stabilität der mit dem erfindungsgemäß verwendeten Klebstoffsystem realisierten Klebstoffbindung ist der Stabilität vergleichbarer EVA-Systeme überlegen. Das erfindungsgemäß verwendete Klebstoffsystem zeigt insbesondere eine exzellente Adhäsion; im allgemeinen ist die Adhäsion des erfindungsgemäß verwendeten Schmelzklebstoffsystems im direkten Vergleich zu analog formulierten EVA-Schmelzklebstoffen verbessert. Des weiteren weisen die erfindungsgemäß verwendeten Schmelzklebstoffe eine gegenüber vergleichbaren EVA-basierten Schmelzklebstoffen verbesserte Tieftemperaturfestigkeit auf, insbesondere da die Glasübergangstemperatur niedriger als bei EVA-Copolymeren liegt.

Des weiteren ist bei vergleichbarer Kohäsion die Viskosität der erfindungsgemäß verwendeten Schmelzklebstoffe niedriger als die von EVA-Schmelzklebstoffen. Auch aus diesem Grund liegen die Verarbeitungstemperaturen des erfindungsgemäß verwendeten Klebstoffsystems mit höchstens 180 °C, vorzugsweise höchstens 175 °C, vorzugsweise höchstens 170 °C, besonders bevorzugt von etwa 160 °C, deutlich unter denen EVA-basierter Schmelzklebstoffe (180 bis 210 °C).

Aufgrund der vorgenannten Eigenschaften des erfindungsgemäß verwendeten Klebstoffsystems führt das erfindungsgemäß verwendete Klebstoffsystem bei seiner Anwendung bzw. Verwendung zu einem gegenüber herkömmlichen EVA-Schmelzklebstoffen verringertem Wartungsaufwand: Die höhere thermische Stabilität, das Fehlen von korrosiven Eigenschaften und die relativ niedrigen Verarbeitungstemperaturen reduzieren drastisch den Aufwand für Reinigungs- und Wartungsarbeiten an Hotmelt-Verarbeitungs- und -Auftragsgeräten. Somit steigt die Anlagenverfügbarkeit und damit die Produktivität.

Die zuvor genannten Eigenschaften des erfindungsgemäß verwendeten Klebstoffsystems lassen sich nur durch die Verwendung von metallocenkatalytisch hergestellten Polyolefinen - und dies nur im Rahmen der erfindungsgemäßen Kombination und Auswahl - realisieren. Derartige metallocenkatalytisch hergestellten Polyolefine zeichnen sich - im Unterschied zu mit Ziegler-Natta-Katalyse hergestellten Polyolefinen - insbesondere durch eine enge Molekularmassenverteilung bzw. Polydispersität, einhergehend mit definierten molekularen Strukturen, aus. Insbesondere sind in den metallocenkatalytisch hergestellten Polyolefine keine unerwünscht niedermolekularen Verbindungen, die zu einer Geruchsbelästigung führen können, und keine unerwünscht hochmolekularen Verbindungen, die zu einem unerwünschten Viskositätsanstieg führen können, vorhanden, sondern nur die gewünschte Molekularmassenbereiche. Durch die Metallocenkatalyse lassen sich auch verschiedene andere physikochemische Eigenschaften, wie Temperaturbeständigkeit, Härte, Schlagzähigkeit, Transparenz etc., gezielt einstellen, so daß ein entsprechend einheitlich zusammengesetztes Polymer resultiert - was mit Ziegler/Natta-Katalyse nicht möglich ist. Diese Erkenntnisse tragen dazu bei, die Leistungsfähigkeit des erfindungsgemäß verwendeten Klebstoffsystems zumindest teilweise zu verstehen.

Schließlich vereinbart das erfindungsgemäß verwendete Klebstoffsystem die Eigenschaften einer guten Kohäsion und Adhäsion einerseits und einer guten Flexibilität der resultierenden Klebeverbindung andererseits.

Weitere Ausgestaltungen, Abwandlungen, Variationen und Vorteile der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand des folgenden Ausführungsbeispiels veranschaulicht, welches die vorliegende Erfindung jedoch keinesfalls beschränkt.

### Ausführungsbeispiel:

Ein EVA-basierter Schmelzklebstoff wurde im Vergleich zu einem erfindungsgemäß verwendeten Schmelzklebstoffsystem hergestellt und getestet:
Die Zusammensetzung der beiden getesteten Klebstoffe ist in der nachfolgenden Tabelle 1 wiedergegeben:

**Tabelle 1**

| **Rohstoff** | **Hersteller** | **EVA-Schmelzklebstoff (Gew.-Teile)** | **Erfindungsgemäß verwendeter Schmelzklebstoff I (Gew.-Teile)** |
|---|---|---|---|
| Escorene^{®} UL 53019 | Exxon Mobil Chemical | 24,5 | - |
| Escorene^{®} UL 15028 | Exxon Mobil Chemical | 20,0 | - |
| Escorene^{®} UL 05540 | Exxon Mobil Chemical | 20,0 | - |
| Affinity^{®} EG 8200 | Dow Chemical | - | 10,0 |
| Affinity^{®} GA 1950 | Dow Chemical | - | 34,5 |
| Affinity^{®} GA 1900 | Dow Chemical | - | 20,0 |
| Irganox^{®} 1076 | Ciba Specialty Chemicals | 0,3 | 0,3 |
| Irgafos^{®} TNPP | Ciba Specialty Chemicals | 0,2 | 0,2 |
| Escorez^{®} 5320 | Exxon Mobil Chemical | 35,0 | 35,0 |

Bei den Produkten der Serie Escorene^{®} handelt es sich um unterschiedliche Ethylen/Vinylacetat-Copolymere mit unterschiedlichen Schmelzindizes (MFIs), während es sich bei den Produkten der Serie Affinity^{®} um unterschiedliche metallocenkatalytisch hergestellte C₂/C₈-Poly-α-olefine mit unterschiedlichen Schmelzindizes (MFIs) handelt (MFIs) bei 190 °C: Affinity^{®} GA 1900 [1.000 g/10 Minuten]; Affinity^{®} GA 1950 [500 g/10 Minuten]; Affinity^{®} EG 8200 [5 g/10 Minuten]). Die eingesetzten Polyolefine unterscheiden sich zudem in ihren Dichten (Affinity^{®} GA 1900: 0,870 g/cm³; Affinity^{®} GA 1950: 0,874 g/cm³; Affinity^{®} EG 8200: 0,870 g/cm³) sowie in anderen physikochemischen Eigenschaften (Viskositäten, Schmelzpunkte, Glasübergangstemperaturen, Molekularmassen etc.).

Die mit den beiden in Rede stehenden Klebstoffsystemen erzielten Verklebungseigenschaften sind in der nachfolgenden Tabelle 2 wiedergegeben:

**Tabelle 2**

| | **EVA-Schmelzklebstoff** | | **Erfindungsgemäß verwendeter Schmelzklebstoff** | |
|---|---|---|---|---|
| Viskosität bei 160 °C [mPa · s] | 33.000 | | 26.000 | |
| Viskosität bei 190 °C [mPa · s] | 13.000 | | 12.000 | |
| Erweichungspunkt Ring-Kugel [°C] | 85 | | 83 | |
| Dichte [g/cm³] | 0,95 | | 0,90 | |
| Geruch | leicht stechend | | Neutral | |
| Stabilität nach 8 h | Ringbildung bei 190 °C | | keine Ringbildung bei 160 °C | |
| Stabilität nach 16 h | Ringbildung bei 190 °C | | keine Ringbildung bei 160 °C | |

| **Mechanische Eigenschaften** | | | | |
|---|---|---|---|---|
| Max. Zugfestigkeit [MPa] | 1,4 ± 0,1 | | 1,3 ± 0,1 | |
| Reißdehnung [%] | 100 ± 30 | | 700 ± 70 | |

| **Adhäsionseigenschaften** | | | | |
|---|---|---|---|---|
| | **RT** | **+6°C** | **RT** | **+6°C** |
| U/O/700, Kröning, Hüllhorst, D (Papierdekorfolie) | ++++ | ++++ | ++++ | ++++ |
| MysticSilber115, WKP, Unterensingen, D (Papierdekorfolie) | ---- | ---- | ++++ | ++++ |
| Alkorcell Esche Silber, Alkor, München, D (thermoplastische PP-Folie) | +++- | +---- | ++++ | +++- |
| Alkorcell Polar Weiß, Alkor, München, D (thermoplastische PP-Folie) | +++- | +--- | ++++ | +++- |

Das erfindungsgemäß verwendete Klebstoffsystem zeigt gegenüber dem EVA-basierten Schmelzklebstoff deutlich verbesserte Adhäsionseigenschaften in bezug auf verschiedene Substrate (konkret: Papierdekorfolien und thermoplastische Polypropylenfolien) bei gleichzeitig verbesserter Elastizität bzw. Reißdehnung der erzielten Verklebungsverbindung nach 24stündigen Lagerung bei Raumtemperatur (20 °C) bei 50 % relativer Luftfeuchtigkeit. Die Festigkeit der Klebeverbindung ist sowohl bei Raumtemperatur als auch bei tiefen Temperaturen verbessert. Die Schmelzestabilität ist erhöht, und dies bei Verwendung identischer Stabilisatoren in identischen Mengen. Aufgrund der geringen Dichte des erfindungsgemäß verwendeten Schmelzklebstoffs ist die Auftragsmenge reduziert. Das erfindungsgemäß verwendete Klebstoffsystem ist dem EVA-basierten Klebstoffsystem somit deutlich überlegen.

Zwei weitere Klebstoffe IIA und IIB wurden entsprechend der Rezeptur der nachfolgenden Tabelle 3 formuliert. Die Schmelzklebstoffe IIA und IIB unterscheiden sich von dem erfindungsgemäß verwendeten Klebstoff I dadurch, daß die Schmelzklebstoffe IIA und IIB kein metallocenkatalytisch hergestelltes C₂/C₈-Poly-α-olefin mit einem Schmelzindex (MFI) unterhalb von 100, hier konkret: keine Komponente Affinity^{®} EG 8200, aufweisen.

**Tabelle 3**

| **Rohstoff** | **Hersteller** | **Schmelzklebstoffe (Gew.-Teile)** | |
|---|---|---|---|
| | | **IIA** | **IIB** |
| Affinity^{®} EG 8200 | Dow Chemical | - | - |
| Affinity^{®} GA 1950 | Dow Chemical | 38,5 | 40,8 |
| Affinity^{®} GA 1900 | Dow Chemical | 22,2 | 23,7 |
| Irganox^{®} 1076 | Ciba Specialty Chemicals | 0,3 | 0,3 |
| Irgafos^{®} TNPP | Ciba Specialty Chemicals | 0,2 | 0,2 |
| Escorez^{®} 5320 | Exxon Mobil Chemical | 38,8 | 35,0 |

Wie die nachstehende Tabelle 4 zeigt, sind die Anwendungseigenschaften, insbesondere die Viskositäts- und mechanischen Eigenschaften, wie z. B. die Zugfestigkeit und Reißdehnung, sowie die Anfangs- und Wärmefestigkeiten in bezug auf die Verklebung von Holzsubstraten mit unterschiedlichen Dekorfolien der Schmelzklebstoffe IIA und IIB zwar ausreichend bzw. gut, aber weniger günstig als im Fall des erfindungsgemäß verwendeten Schmelzklebstoffs I. Dies zeigt, daß durch die zusätzliche Inkorporierung eines metallocenkatalytisch hergestellten C₂/C₈-Poly-α-olefins mit einem kleineren Schmelzindex (MFI), insbesondere unterhalb von 100, in Mischung mit metallocenkatalytisch hergestellten C₂/C₈-Poly-α-olefinen mit größerem Schmelzindex (MFI), insbesondere oberhalb von 500, eine deutliche Leistungssteigerung des erfindungsgemäß verwendeten Klebstoffsystems erreicht werden kann.

Die mit den Klebstoffsystemen IIA und IIB erzielten Verklebungseigenschaften sind in der nachfolgenden Tabelle 4 wiedergegeben:

**Tabelle 4**

| | **Schmelzklebstoff IIA** | | **Schmelzklebstoff IIB** | |
|---|---|---|---|---|
| Viskosität bei 160 °C [mPa · s] | 9.300 | | 10.000 | |
| Viskosität bei 190 °C [mPa · s] | 4.300 | | 4.700 | |
| Erweichungspunkt Räng-Kugel [°C] | 78 | | 79 | |

| **Mechanische Eigenschaften** | | | | |
|---|---|---|---|---|
| Max. Zugfestigkeit [MPa] | 0,9 ± 0,1 | | 1,0 ± 0,1 | |
| Reißdehnung [%] | 22 ± 6 | | 210 ± 50 | |

| **Adhäsionseigenschaften** | | | | |
|---|---|---|---|---|
| | RT | +6°C | RT | +6°C |
| U/O/700, Kröning, Hüllhorst, D (Papierdekorfolie) | ++++ | ++++ | ++++ | ++++ |
| MysticSilber115, WKP, Unterensingen, D (Papierdekorfolie) | ++++ | ++++ | ++++ | +++ |
| Alkorcell Esche Silber, Alkor, München, D (thermoplastische PP-Folie) | ++++ | ++++ | ++++ | ++++ |
| Alkorcell Polar Weiß, Alkor, München, D (thermoplastische PP-Folie) | ++++ | ++++ | ++++ | +++- |

## Patentansprüche

1. **Verwendung eines** Klebstoffsystems auf Basis eines nichtreaktiven thermoplastischen Schmelzklebstoffs **als Schmelz- und/oder Montagewerkstoff** in der Holz- und Möbelverarbeitung, wobei der Schmelzklebstoff
(A) eine Mischung von mindestens zwei voneinander verschiedenen metallocenkatalytisch hergestellten Copolymeren jeweils von Ethylen oder Propylen mit mindestens einem vorzugsweise linearen α-Olefin,
- wobei die voneinander verschiedenen Copolymere der Mischung unterschiedliche Schmelzindizes (MFIs) aufweisen, wobei die Mischung metallocenkatalytisch hergestellte Copolymere ("Copolymere I") mit Schmelzindizes MFI ≥ 500 g / 10 min einerseits und metallocenkatalytisch hergestellte Copolymere ("Copolymere II") mit Schmelzindizes MFI ≤ 100 g / 10 min andererseits umfaßt und wobei die Angaben der Schmelzindizes auf ISO 1133 oder ASTM D 1238 bei 190 °C und unter 2,16 kg Last bezogen sind, und
- wobei alle Copolymere der Mischung eine Polydispersität M_{w}/Mₙ von 1,5 bis 2,5 aufweisen;
(B) gegebenenfalls mindestens ein weiteres Polymer; und
(C) mindestens ein Harz
enthält.

2. **Verwendung** nach Anspruch 1, wobei der Schmelzklebstoff die Mischung (A) der verschiedenen Copolymere, bezogen auf den Schmelzklebstoff, in Mengen von 30 bis 90 Gew.-%, vorzugsweise 40 bis 80 Gew.-%, besonders bevorzugt 60 bis 70 Gew.-%, enthält.

3. **Verwendung** nach Anspruch 1 oder 2, wobei der Schmelzklebstoff das weitere Polymer (B), bezogen auf den Schmelzklebstoff, in Mengen von 0,001 bis 30 Gew.-%, insbesondere 0,01 bis 25 Gew.-%, vorzugsweise 1 bis 25 Gew.-%, enthält.

4. **Verwendung** nach einem oder mehreren der vorangehenden Ansprüche, wobei die metallocenkatalytisch hergestellten Copolymere der Mischung (A) jeweils metallocenkatalytisch hergestellte Copolymere von Ethylen oder Propylen mit mindestens einem vorzugsweise linearen α-Olefin, sind, wobei im Fall von Ethylen das α-Olefin ein C₃-C₂₀-α-Olefin ist, vorzugsweise ausgewählt aus der Gruppe von Propylen, Isobutylen, 1-Buten, 1-Penten, 1-Hexen, 1-Hepten, 4-Methyl-1-penten und 1-Octen, und/oder wobei im Fall von Propylen das α-Olefin ein C₄-C₂₀-α-Olefin ist, vorzugsweise ausgewählt aus der Gruppe von Isobutylen, 1-Buten, 1-Penten, 1-Hexen, 1-Hepten, 4-Methyl-1-penten und 1-Octen.

5. **Verwendung** nach einem oder mehreren der vorangehenden Ansprüche, wobei die metallocenkatalytisch hergestellten Copolymere der Mischung (A) jeweils metallocenkatalytisch hergestellte Copolymere von Ethylen mit 1-Octen sind und/oder wobei die Mischung (A) unterschiedliche metallocenkatalytisch hergestellte Ethylen/1-Octen-Copolymere mit unterschiedlichen Schmelzindizes (MFIs) umfaßt.

6. **Verwendung** nach einem oder mehreren der vorangehenden Ansprüche, wobei für den Fall, daß die Mischung (A) mehr als zwei voneinander verschiedene Copolymere enthält, mindestens zwei der verschiedenen Copolymere unterschiedliche Schmelzindizes (MFIs) aufweisen.

7. **Verwendung** nach einem oder mehreren der vorangehenden Ansprüche, wobei die unterschiedliche Schmelzindizes (MFIs) mindestens um 400 g / 10 min, ganz besonders bevorzugt um mindestens 600 g / 10 min, voneinander verschieden sind.

8. **Verwendung** nach einem oder mehreren der vorangehenden Ansprüche, wobei die Mischung (A) metallocenkatalytisch hergestellte Copolymere ("Copolymere I") mit Schmelzindizes MFI > 600 g / 10 min, vorzugsweise MFI > 700 g / 10 min, einerseits und metallocenkatalytisch hergestellte Copolymere ("Copolymere II") mit Schmelzindizes MFI < 50 g / 10 min, vorzugsweise MFI < 30 g / 10 min, andererseits umfaßt.

9. **Verwendung** nach einem oder mehreren der vorangehenden Ansprüche, wobei das gewichtsbezogene Copolymere I / Copolymere II-Mengenverhältnis im Bereich von 10 : 1 bis 1 : 2, insbesondere 7 : 1 bis 1 : 1, vorzugsweise 6 : 1 bis 5 : 1, variiert.

10. **Verwendung** nach einem oder mehreren der vorangehenden Ansprüche, wobei die Dichte aller Copolymere der Mischung (A) kleiner als 0,900 g / cm³, insbesondere kleiner als 0,890 g / cm³, vorzugsweise kleiner als 0,880 g / cm³, ist und vorzugsweise im Bereich von 0,840 bis 0,900 g / cm³, insbesondere 0,850 bis 0,890 g / cm³, liegt.

11. **Verwendung** nach einem oder mehreren der vorangehenden Ansprüche, wobei die voneinander verschiedenen Copolymere der Mischung (A) unterschiedliche Dichten aufweisen, insbesondere wobei für den Fall, daß die Mischung (A) mehr als zwei voneinander verschiedene Copolymere enthält, mindestens zwei der verschiedenen Copolymere unterschiedliche Dichten aufweisen und/oder insbesondere wobei die unterschiedlichen Dichten mindestens um 1,0 · 10⁻³ g/cm³, insbesondere mindestens um 2,0 · 10⁻³ g / cm³, vorzugsweise mindestens um 3,0 · 10⁻³ g / cm³, und/oder insbesondere um bis zu 4,0 · 10⁻³ g / cm³ voneinander verschieden sind.

12. **Verwendung** nach einem oder mehreren der vorangehenden Ansprüche, wobei die voneinander verschiedenen Copolymere der Mischung (A) unterschiedliche Brookfield-Viskositäten aufweisen, insbesondere wobei für den Fall, daß die Mischung (A) mehr als zwei voneinander verschiedene Copolymere enthält, mindestens zwei der verschiedenen Copolymere unterschiedliche Brookfield-Viskositäten aufweisen und/oder insbesondere wobei die unterschiedlichen Brookfield-Viskositäten bei 177 °C mindestens um 1.000 mPa · s, insbesondere mindestens um 2.000 mPa · s, vorzugsweise mindestens um 3.000 mPa · s, besonders bevorzugt mindestens um 5.000 mPa · s, und/oder insbesondere um bis zu 8.000 mPa · s oder mehr voneinander verschieden sind.

13. **Verwendung** nach Anspruch 12, wobei die Mischung (A) Copolymere mit Brookfield-Viskositäten bei 177 °C von mehr als 10.000 mPa · s, insbesondere mehr als 12.000 mPa · s, vorzugsweise mehr als 15.000 mPa · s, einerseits und Copolymere mit Brookfield-Viskositäten bei 177 °C von weniger als 10.000 mPa · s, insbesondere weniger als 9.000 mPa · s, vorzugsweise weniger als 8.500 mPa · s, andererseits umfaßt.

14. **Verwendung** nach einem oder mehreren der vorangehenden Ansprüche, wobei die voneinander verschiedenen Copolymere der Mischung (A) unterschiedliche Glasübergangstemperaturen T_{g} aufweisen, insbesondere wobei für den Fall, daß die Mischung (A) mehr als zwei voneinander verschiedene Copolymere enthält, mindestens zwei der verschiedenen Copolymere unterschiedliche Glasübergangstemperaturen T_{g} aufweisen und/oder insbesondere wobei die unterschiedlichen Glasübergangstemperaturen T_{g} mindestens um 2 °C, insbesondere mindestens um 3 °C, vorzugsweise mindestens um 5 °C, voneinander verschieden sind.

15. **Verwendung** nach einem oder mehreren der vorangehenden Ansprüche, wobei die voneinander verschiedenen Copolymere der Mischung (A) unterschiedliche Schmelzpunkte (DSC) aufweisen, insbesondere wobei für den Fall, daß die Mischung (A) mehr als zwei voneinander verschiedene Copolymere enthält, mindestens zwei der verschiedenen Copolymere unterschiedliche Schmelzpunkte (DSC) aufweisen und/oder insbesondere wobei die unterschiedlichen Schmelzpunkte (DSC) mindestens um 2 °C, insbesondere mindestens um 3 °C, vorzugsweise mindestens um 5 °C, besonders bevorzugt mindestens um 7 °C, voneinander verschieden sind.

16. **Verwendung** nach Anspruch 15, wobei die Mischung (A) Copolymere mit Schmelzpunkten (DSC) von mehr 65 °C, insbesondere mehr als 66 °C, vorzugsweise mehr 67 °C, einerseits und Copolymere mit Schmelzpunkten (DSC) von weniger als 65 °C, insbesondere weniger als 64 °C, andererseits umfaßt.

17. **Verwendung** nach einem oder mehreren der vorangehenden Ansprüche, wobei alle Copolymere der Mischung (A) gewichtsmittlere Molekularmassen M_{w} im Bereich von 2.000 bis 100.000 g / mol aufweisen.

18. **Verwendung** nach einem oder mehreren der vorangehenden Ansprüche, wobei das weitere Polymer der Komponente (B) ausgewählt ist aus der Gruppe von vorzugsweise amorphen Poly-α-olefinen, thermoplastischen Polyurethanen, Ethylen/(Meth-)Acrylat-Copolymeren und Ethylen/Vinylacetat-Copolymeren sowie deren Mischungen.

19. **Verwendung** nach einem oder mehreren der vorangehenden Ansprüche, enthaltend außerdem weitere Inhaltsstoffe und/oder Additive, insbesondere aus der Gruppe von Stabilisatoren, Alterungsschutzmitteln, UV-Stabilisatoren, Weichmachern, Füllstoffen, Katalysatoren und/oder Lösemitteln.

20. Verwendung nach einem oder mehreren der vorangehenden Ansprüche, wobei das Klebstoffsystem und/oder der Schmelzklebstoff eine Brookfield-Viskosität bei 160 °C von 5.000 bis 120.000 mPa · s aufweist.

21. **Verwendung** nach einem oder mehreren der vorangehenden Ansprüche, wobei das Klebstoffsystem und/oder der Schmelzklebstoff eine maximale Zugfestigkeit, bestimmt gemäß DIN 53455 nach Auftrag und 24stündiger Lagerung im Normalklima (50 % relative Luftfeuchtigkeit, 20 °C), von 1 bis 4 MPa, insbesondere 1 bis 2 MPa, aufweist.

22. **Verwendung** nach einem oder mehreren der vorangehenden Ansprüche, wobei das Klebstoffsystem und/oder der Schmelzklebstoff eine Reißdehnung, bestimmt gemäß DIN 53455 nach Auftrag und 24stündiger Lagerung im Normalklima (50 % relative Luftfeuchtigkeit, 20 °C), von 200 bis 1.200 %, insbesondere 300 bis 1.000 %, aufweist.

23. Verwendung nach **einem oder mehreren der vorangehenden Ansprüche** zu Zwecken der Profilummantelung oder der Kantenverleimung.

24. Verwendung nach einem oder mehreren der **vorangehenden** Ansprüche, wobei das Klebstoffsystem bei Auftragstemperaturen unterhalb von 180 ° C, insbesondere unterhalb von 175 °C, vorzugsweise unterhalb von 170 °C, vorzugsweise bei etwa (160 ± 10) °C, appliziert wird.

## Claims

1. Use of an adhesive system based on a non-reactive thermoplastic hotmelt adhesive as a melt material and/or assembly material in wood processing and furniture processing, wherein the hotmelt adhesive comprises
(A) a mixture of at least two mutually different metallocene-catalytically prepared copolymers each of ethylene or propylene with at least one preferably linear α-olefin,
- where the mutually different copolymers of the mixture have different melt indices (MFIs), where the mixture comprises metallocene-catalytically prepared copolymers ("copolymers I") having melt indices MFI ≥ 500 g/10 min, on the one hand, and metallocene-catalytically prepared copolymers ("copolymers II") having melt indices MFI ≤ 100 g/10 min, on the other hand, and where the figures for the melt indices are based on ISO 1133 or ASTM D 1238 at 190 °C under a 2.16 kg load, and
- where all copolymers of the mixture have a polydispersity M_{w}/Mₙ of 1.5 to 2.5;
(B) optionally at least one further polymer; and
(C) at least one resin.

2. Use according to Claim 1, wherein the hotmelt adhesive comprises the mixture (A) of the different copolymers, based on the hotmelt adhesive, in amounts of 30 % to 90 %, preferably 40 % to 80 %, more preferably 60 % to 70 %, by weight.

3. Use according to Claim 1 or 2, wherein the hotmelt adhesive comprises the further polymer (B), based on the hotmelt adhesive, in amounts of 0.001 % to 30 %, in particular 0.01 % to 25 %, preferably 1 % to 25 %, by weight.

4. Use according to one or more of the preceding claims, wherein the metallocene-catalytically prepared copolymers of the mixture (A) are each metallocene-catalytically prepared copolymers of ethylene or propylene with at least one preferably linear α-olefin, where, in the case of ethylene, the α-olefin is a C₃-C₂₀ α-olefin, preferably selected from the group consisting of propylene, isobutylene, 1-butene, 1-pentene, 1-hexene, 1-heptene, 4-methyl-1-pentene and 1-octene, and/or where, in the case of propylene, the α-olefin is a C₄-C₂₀ α-olefin, preferably selected from the group consisting of isobutylene, 1-butene, 1-pentene, 1-hexene, 1-heptene, 4-methyl-1-pentene and 1-octene.

5. Use according to one or more of the preceding claims, wherein the metallocene-catalytically prepared copolymers of the mixture (A) are each metallocene-catalytically prepared copolymers of ethylene with 1-octene and/or where the mixture (A) comprises different metallocene-catalytically prepared ethylene/1-octene copolymers having different melt indices (MFIs).

6. Use according to one or more of the preceding claims, wherein, when the mixture (A) comprises more than two mutually different copolymers, at least two of the different copolymers have different melt indices (MFIs).

7. Use according to one or more of the preceding claims, wherein the different melt indices (MFIs) differ from one another at least by 400 g/10 min, very preferably by at least 600 g/10 min.

8. Use according to one or more of the preceding claims, wherein the mixture (A) comprises metallocene-catalytically prepared copolymers ("copolymers I") having melt indices MFI > 600 g/10 min, preferably MFI > 700 g/10 min, on the one hand, and metallocene-catalytically prepared copolymers ("copolymers II") having melt indices MFI < 50 g/10 min, preferably MFI < 30 g/10 min, on the other hand.

9. Use according to one or more of the preceding claims, wherein the weight-based copolymers I/copolymers II quantity ratio varies in the range from 10 : 1 to 1 : 2, in particular 7 : 1 to 1 : 1, preferably 6 : 1 to 5 : 1.

10. Use according to one or more of the preceding claims, wherein the density of all the copolymers of the mixture (A) is less than 0.900 g/cm³, in particular less than 0.890 g/cm³, preferably less than 0.880 g/cm³, and is preferably in the range from 0.840 to 0.900 g/cm³, in particular 0.850 to 0.890 g/cm³.

11. Use according to one or more of the preceding claims, wherein the mutually different copolymers of the mixture (A) have different densities, in particular where, when the mixture (A) comprises more than two mutually different copolymers, at least two of the different copolymers have different densities, and/or in particular when the different densities are different from one another at least by 1.0 · 10⁻³ g/cm³, in particular at least by 2.0 · 10⁻³ g/cm³, preferably at least by 3.0 · 10⁻³ g/cm³, and/or in particular by up to 4.0 · 10⁻³ g/cm³.

12. Use according to one or more of the preceding claims, wherein the mutually different copolymers of the mixture (A) have different Brookfield viscosities, in particular where, when the mixture (A) comprises more than two mutually different copolymers, at least two of the different copolymers have different Brookfield viscosities, and/or in particular where the different Brookfield viscosities are different from one another at 177 °C at least by 1000 mPa·s, in particular at least by 2000 mPa·s, preferably at least by 3000 mPa·s, more preferably at least by 5000 mPa·s, and/or in particular by up to 8000 mPa·s or more.

13. Use according to Claim 12, wherein the mixture (A) comprises copolymers having Brookfield viscosities at 177 °C of more than 10 000 mPa·s, in particular more than 12 000 mPa·s, preferably more than 15 000 mPa·s, on the one hand, and copolymers having Brookfield viscosities at 177 °C of less than 10 000 mPa·s, in particular less than 9 000 mPa·s, preferably less than 8 500 mPa·s, on the other hand.

14. Use according to one or more of the preceding claims, wherein the mutually different copolymers of the mixture (A) have different glass transition temperatures T_{g}, in particular where, when the mixture (A) comprises more than two mutually different copolymers, at least two of the different copolymers have different glass transition temperatures T_{g} and/or in particular where the different glass transition temperatures T_{g} are different from one another at least by 2 °C, in particular at least by 3 °C, preferably at least by 5 °C.

15. Use according to one or more of the preceding claims, wherein the mutually different copolymers of the mixture (A) have different melting points (DSC), in particular where, when the mixture (A) comprises more than two mutually different copolymers, at least two of the different copolymers have different melting points (DSC), and/or in particular where the different melting points (DSC) are different from one another at least by 2 °C, in particular at least by 3 °C, preferably at least by 5 °C, more preferably at least by 7 °C.

16. Use according to Claim 15, wherein the mixture (A) comprises copolymers having melting points (DSC) of more than 65 °C, in particular more than 66 °C, preferably more than 67 °C, on the one hand, and copolymers having melting points (DSC) of less than 65 °C, in particular less than 64 °C, on the other hand.

17. Use according to one or more of the preceding claims, wherein all the copolymers of the mixture (A) have weight-average molecular masses M_{w} in the range from 2000 to 100 000 g/mol.

18. Use according to one or more of the preceding claims, wherein the further polymer of component (B) is selected from the group consisting of preferably amorphous poly-α-olefins, thermoplastic polyurethanes, ethylene/(meth)acrylate copolymers and ethylene/vinyl acetate copolymers and also mixtures thereof.

19. Use according to one or more of the preceding claims, wherein the adhesive system further comprises further ingredients and/or additives, in particular from the group consisting of stabilizers, ageing inhibitors, UV stabilizers, plasticizers, fillers, catalysts and/or solvents.

20. Use according to one or more of the preceding claims, wherein the adhesive system and/or the hotmelt adhesive has a Brookfield viscosity at 160 °C of 5000 to 120 000 mPa·s.

21. Use according to one or more of the preceding claims, wherein the adhesive system and/or the hotmelt adhesive has a maximum tensile strength, determined in accordance with DIN 53455 following application and 24-hour storage under standard conditions (50 % relative humidity, 20 °C), of 1 to 4 MPa, in particular 1 to 2 MPa.

22. Use according to one or more of the preceding claims, wherein the adhesive system and/or the hotmelt adhesive has an elongation at break, determined in accordance with DIN 53455 following application and 24-hour storage under standard conditions (50 % relative humidity, 20 °C), of 200 % to 1200 %, in particular 300 % to 1000 %.

23. Use according to one or more of the preceding claims for purposes of profile wrapping or of edge gluing.

24. Use according to one or more of the preceding claims, wherein the adhesive system is applied at application temperatures of below 180 °C, in particular at below 175 °C, preferably at below 170 °C, preferably at about (160 ± 10) °C.

## Revendications

1. Utilisation d'un système adhésif à base d'un adhésif thermofusible thermoplastique non réactif en tant que matériau thermofusible et/ou matériau de montage dans l'usinage du bois et des meubles, l'adhésif thermofusible contenant
(A) un mélange d'au moins deux copolymères différents les uns des autres, fabriqués par catalyse métallocène, à chaque fois d'éthylène ou de propylène avec au moins une α-oléfine de préférence linéaire,
- les copolymères différents les uns des autres du mélange présentant différents indices de fluidité à chaud (MFI), le mélange comprenant des copolymères fabriqués par catalyse métallocène ("copolymères I") ayant des indices de fluidité à chaud MFI ≥ 500 g/10 min d'une part et des copolymères fabriqués par catalyse métallocène ("copolymères II") ayant des indices de fluidité à chaud MFI ≤ 100 g/10 min d'autre part, les données des indices de fluidité à chaud se rapportant à ISO 1133 ou ASTM D 1238 à 190 °C et sous une charge de 2,16 kg, et
- tous les copolymères du mélange présentant une polydispersité M_{w}/Mₙ de 1,5 à 2,5;
(B) éventuellement au moins un polymère supplémentaire et
(C) au moins une résine.

2. Utilisation selon la revendication 1, dans laquelle l'adhésif thermofusible contient le mélange (A) des différents copolymères, par rapport à l'adhésif thermofusible, en quantités de 30 à 90 % en poids, de préférence de 40 à 80 % en poids, de manière particulièrement préférée de 60 à 70 % en poids.

3. Utilisation selon la revendication 1 ou 2, dans laquelle l'adhésif thermofusible contient le polymère supplémentaire (B), par rapport à l'adhésif thermofusible, en quantités de 0,001 à 30 % en poids, notamment de 0,01 à 25 % en poids, de préférence de 1 à 25 % en poids.

4. Utilisation selon une ou plusieurs des revendications précédentes, dans laquelle les copolymères fabriqués par catalyse métallocène du mélange (A) sont à chaque fois des copolymères fabriqués par catalyse métallocène d'éthylène ou de propylène avec au moins une α-oléfine de préférence linéaire, dans le cas de l'éthylène, l'a-oléfine étant une α-oléfine en C₃-C₂₀, de préférence choisie dans le groupe constitué par le propylène, l'isobutylène, le 1-butène, le 1-pentène, le 1-hexène, le 1-heptène, le 4-méthyl-1-pentène et le 1-octène, et/ou, dans le cas du propylène, l'a-oléfine étant une α-oléfine en C₄-C₂₀, de préférence choisie dans le groupe constitué par l'isobutylène, le 1-butène, le 1-pentène, le 1-hexène, le 1-heptène, le 4-méthyl-1-pentène et le 1-octène.

5. Utilisation selon une ou plusieurs des revendications précédentes, dans laquelle les copolymères fabriqués par catalyse métallocène du mélange (A) sont à chaque fois des copolymères fabriqués par catalyse métallocène d'éthylène avec du 1-octène et/ou dans lequel le mélange (A) comprend différents copolymères éthylène/1-octène fabriqués par catalyse métallocène ayant différents indices de fluidité à chaud (MFI).

6. Utilisation selon une ou plusieurs des revendications précédentes, dans laquelle, dans le cas où le mélange (A) contient plus de deux copolymères différents les uns des autres, au moins deux des différents copolymères présentent différents indices de fluidité à chaud (MFI).

7. Utilisation selon une ou plusieurs des revendications précédentes, dans laquelle les différents indices de fluidité à chaud (MFI) sont différents les uns des autres au moins de 400 g/10 min, de manière tout particulièrement préférée d'au moins 600 g/10 min.

8. Utilisation selon une ou plusieurs des revendications précédentes, dans laquelle le mélange (A) comprend des copolymères fabriqués par catalyse métallocène ("copolymères I") ayant des indices de fluidité à chaud MFI > 600 g/10 min, de préférence MFI > 700 g/10 min, d'une part, et des copolymères fabriqués par catalyse métallocène ("copolymères II") ayant des indices de fluidité à chaud MFI < 50 g/10 min, de préférence MFI < 30 g/10 min, d'autre part.

9. Utilisation selon une ou plusieurs des revendications précédentes, dans laquelle le rapport en poids copolymères I/copolymères II varie dans la plage allant de 10:1 à 1:2, notamment de 7:1 à 1:1, de préférence de 6:1 à 5:1.

10. Utilisation selon une ou plusieurs des revendications précédentes, dans laquelle la densité de tous les copolymères du mélange (A) est inférieure à 0,900 g/cm³, notamment inférieure à 0,890 g/cm³, de préférence inférieure à 0,880 g/cm³, et se situe de préférence dans la plage allant de 0,840 à 0,900 g/cm³, notamment de 0,850 à 0,890 g/cm³.

11. Utilisation selon une ou plusieurs des revendications précédentes, dans laquelle les copolymères différents les uns des autres du mélange (A) présentent différentes densités, dans le cas où le mélange (A) contient plus de deux copolymères différents les uns des autres, au moins deux des différents copolymères présentant notamment différentes densités et/ou les différentes densités étant notamment différentes les unes des autres au moins de 1,0·10⁻³ g/cm³, notamment au moins de 2,0·10⁻³ g/cm³, de préférence au moins de 3,0·10⁻³ g/cm³ et/ou notamment de jusqu'à 4,0·10⁻³ g/cm³.

12. Utilisation selon une ou plusieurs des revendications précédentes, dans laquelle les copolymères différents les uns des autres du mélange (A) présentent différentes viscosités de Brookfield, dans le cas où le mélange (A) contient plus de deux copolymères différents les uns des autres, au moins deux des différents copolymères présentant notamment différentes viscosités de Brookfield et/ou les différentes viscosités de Brookfield à 177 °C étant notamment différentes les unes des autres au moins de 1 000 mPa·s, notamment au moins de 2 000 mPa·s, de préférence au moins de 3 000 mPa·s, de manière particulièrement préférée au moins de 5 000 mPa·s et/ou notamment de jusqu'à 8 000 mPa·s ou plus.

13. Utilisation selon la revendication 12, dans lequelle le mélange (A) comprend des copolymères ayant des viscosités de Brookfield à 177 °C supérieures à 10 000 mPa·s, notamment supérieures à 12 000 mPa·s, de préférence supérieures à 15 000 mPa·s, d'une part, et des copolymères ayant des viscosités de Brookfield à 177 °C inférieures à 10 000 mPa·s, notamment inférieures à 9 000 mPa·s, de préférence inférieures à 8 500 mPa·s, d'autre part.

14. Utilisation selon une ou plusieurs des revendications précédentes, dans laquelle les copolymères différents les uns des autres du mélange (A) présentent différentes températures de transition vitreuses T_{g}, dans le cas où le mélange (A) contient plus de deux copolymères différents les uns des autres, au moins deux des différents copolymères présentant notamment différentes températures de transition vitreuses T_{g} et/ou les différentes températures de transition vitreuses T_{g} étant notamment différentes les unes des autres au moins de 2 °C, notamment au moins de 3 °C, de préférence au moins de 5 °C.

15. Utilisation selon une ou plusieurs des revendications précédentes, dans laquelle les copolymères différents les uns des autres du mélange (A) présentent différents points de fusion (DSC), dans le cas où le mélange (A) contient plus de deux copolymères différents les uns des autres, au moins deux des différents copolymères présentant notamment différents points de fusion (DSC) et/ou les différents points de fusion (DSC) étant notamment différents les uns des autres au moins de 2 °C, notamment au moins de 3 °C, de préférence au moins de 5 °C, de manière particulièrement préférée au moins de 7 °C.

16. Utilisation selon la revendication 15, dans laquelle le mélange (A) comprend des copolymères ayant des points de fusion (DSC) supérieurs à 65 °C, notamment supérieurs à 66 °C, de préférence supérieurs à 67 °C, d'une part, et des copolymères ayant des points de fusion (DSC) inférieurs à 65 °C, notamment inférieurs à 64 °C, d'autre part.

17. Utilisation selon une ou plusieurs des revendications précédentes, dans laquelle tous les copolymères du mélange (A) présentent des masses moléculaires moyennes en poids M_{w} dans la plage allant de 2 000 à 100 000 g/mol.

18. Utilisation selon une ou plusieurs des revendications précédentes, dans laquelle le polymère supplémentaire du composant (B) est choisi dans le groupe constitué par les poly-α-oléfines de préférence amorphes, les polyuréthanes thermoplastiques, les copolymères éthylène/(méth)acrylate et les copolymères éthylène/acétate de vinyle, ainsi que leurs mélanges.

19. Utilisation selon une ou plusieurs des revendications précédentes, dans laquelle de système adhésif et/ou l'adhésif thermofusible contient également des composants et/ou additifs supplémentaires, notamment du groupe constitué par les stabilisateurs, les agents antivieillissement, les stabilisateurs UV, les plastifiants, les charges, les catalyseurs et/ou les solvants.

20. Utilisation selon une ou plusieurs des revendications précédentes, dans laquelle le système adhésif et/ou l'adhésif thermofusible présentent une viscosité de Brookfield à 160 °C de 5 000 à 120 000 mPa·s.

21. Utilisation selon une ou plusieurs des revendications précédentes, dans laquelle le système adhésif et/ou l'adhésif thermofusible présentent une résistance à la traction maximale, déterminée selon DIN 53455 après application et stockage de 24 heures en climat normal (50 % d'humidité relative de l'air, 20 °C), de 1 à 4 MPa, notamment de 1 à 2 MPa.

22. Utilisation selon une ou plusieurs des revendications précédentes, dans laquelle le système adhésif et/ou l'adhésif thermofusible présentent un allongement à la rupture, déterminé selon DIN 53455 après application et stockage de 24 heures en climat normal (50 % d'humidité relative de l'air, 20 °C), de 200 à 1 200 %, notamment de 300 à 1 000 %.

23. Utilisation selon une ou plusieurs des revendications précédentes à des fins de revêtement de profilés ou de collage d'arêtes.

24. Utilisation selon une ou plusieurs des revendications précédentes, dans laquelle le système adhésif est appliqué à des températures d'application inférieures à 180 °C, notamment inférieures à 175 °C, de préférence inférieures à 170 °C, de préférence à environ (160 ± 10) °C.
